# EUROPÄISCHE PATENTSCHRIFT

(11) **EP 2 280 200 B1**
(45) Veröffentlichungstag und Bekanntmachung des Hinweises auf die Patenterteilung: **02.09.2015**
(21) Anmeldenummer: 10007564.7
(22) Anmeldetag: 21.07.2010
(51) Int. Cl.: F16J 15/32, F02F 11/00

(54) **Dichtungsanordnung**
Seal arrangement
Agencement d'étanchéification

(30) Priorität: 31.07.2009 DE 202009010428 U
(43) Veröffentlichungstag der Anmeldung: 02.02.2011
(73) Patentinhaber: Carl Freudenberg KG, 69469 Weinheim (DE)
(72) Erfinder: Bour, Bruno, 52600 Montlandon (FR); Rougetet, Niclas, 52600 Chalindrey (FR)

(56) Entgegenhaltungen:
- EP-A1- 0 565 771
- EP-A1- 0 790 445
- DE-A1- 4 212 973
- DE-A1- 19 745 818

## Beschreibung

### Technisches Gebiet

Die Erfindung betrifft eine Dichtungsanordnung, umfassend einen Gehäuseverschlussdeckel mit einer Durchtrittsöffnung für eine abzudichtende Welle, wobei in der Durchtrittsöffnung eine dynamische Dichtlippe angeordnet ist, einer Sensorhalterung, die an dem Dichtflansch angeordnet ist sowie ein Geberrad zur Befestigung auf der abzudichtenden Welle.

### Stand der Technik

Aus der DE 103 30 411 A1 ist eine Dichtungsanordnung der oben genannten Art bekannt. Derartige Dichtungsanordnungen werden zur Abdichtung einer Gehäuseöffnung, beispielsweise eines Kurbelgehäuses eines Kraftfahrzeugmotors eingesetzt. Der Gehäuseverschlussdeckel dichtet hierbei den Wellendurchgang der Kurbelwelle durch das Kurbelgehäuse ab. Die Abdichtung der Kurbelwelle erfolgt durch die dynamisch wirkende Dichtlippe und die Abdichtung gegenüber dem Gehäuse erfolgt durch eine statische Dichtung. Beide Dichtungen sind am den Gehäuseverschlussdeckel festgelegt. An dem Gehäuseverschlussdeckel ist ferner eine Sensorhalterung zur Aufnahme eines Sensors integriert. Der Sensor erfasst die Drehbewegungen des auf der Kurbelwelle befestigten Geberrades und ermöglicht die Erfassung von Drehzahl und Winkellage der Kurbelwelle. Zur Montage sind die Dichtungsanordnung mit den Dichtungen und der Sensorhalterung sowie das Geberrad dabei in einer Montageeinheit zusammengefasst. Die Montage dieser Einheit kann automatisiert erfolgen. Problematisch ist dabei, dass sich das Geberrad vor der Montage in der Montageeinheit verdrehen kann. Insbesondere bei Geberrädem mit Totzeitmarkierung kann dabei die Positionierung des Geberrades auf der Kurbelwelle fehlerhaft sein und es ist eine nachträgliche manuelle Justierung des Geberrades erforderlich. Die EP 0 790 445 A1 offenbart eine gattungsgemäße Dichtungsanordnung.

### Darstellung der Erfindung

Der Erfindung liegt die Aufgabe zugrunde, die Dichtungsanordnung so weiterzuentwickeln, dass die Montage vereinfacht ist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist das Geberrad so durch eine Positioniereinrichtung in der Durchtrittsöffnung fixiert, dass das Geberrad nur begrenzt innerhalb vorgegebener Winkelbereiche verdrehbar ist. Die Positioniereinrichtung ist eine Montagehilfe, die lediglich für Zwecke des Transports und der Montage das Geberrad in der Dichtungsanordnung fixiert. Nach Abschluss der Montage wird die Positioniereinrichtung entfernt und das Geberrad ist gegenüber der Sensorhalterung frei drehbar. Während des Transports und der Montage wird das Geberrad durch die Positioniereinrichtung zum einen in der Dichtungsanordnung fixiert, so dass es nicht verloren gehen kann und zum anderen verhindert die Positioniereinrichtung, dass sich das Geberrad vor der Montage in der Dichtungsanordnung verdrehen kann, so dass die Positionierung und die Kalibrierung gegenüber der Sensorhalterung beziehungsweise dem in der Sensorhalterung befestigten Sensor vereinfacht ist. Somit fungiert die Positioniereinrichtung als Montagehilfe.

Die Positioniereinrichtung kann so gestaltet sein, dass das Geberrad maximal in einem festgelegten Winkelbereich in beide Seiten verdrehbar ist. Dieser Winkelbereich beträgt vorzugsweise 20°, Die Verdrehbarkeit soll insbesondere während des Transports und der Montage gegeben sein. Gegenüber einer neutralen Position in Beziehung zu dem Sensor oder der Sensorhalterung ergibt sich somit eine maximale Verdrehbarkeit von ± 10°. Für die automatisierte Kalibrierung während der Montage ist es erforderlich, dass das Geberrad begrenzt verdrehbar ist, damit die richtige Position des Geberrades automatisiert auffindbar ist. Problematisch ist die Kalibrierung bei einer freien Verdrehbarkeit des Geberrades, da sich das Geberrad dabei so weit verdrehen kann, dass die richtige Position nicht automatisiert auffindbar ist.

Das Geberrad kann eine Zahnradkontur, vorzugsweise auf dessen Umfang aufweisen und die Positioniereinrichtung kann in die Zahnradkontur eingreifen. Dabei kann das Geberrad als Stanzteil ausgebildet sein, welches kostengünstig herstellbar ist. Zahnradkonturen sind robuste Signalgeber und können sowohl optisch als auch elektromagnetisch ausgelesen werden. Bei einer elektromagnetischen Auslesung ist das Geberrad ein passiver Signalgeber und wird vorzugsweise durch einen Hallsensor ausgelesen. Die Zahnradkontur kann dabei zusätzlich ein irreguläres Element, beispielsweise in Form eines ausgelassenen Zahns aufweisen. Diese irreguläre kann dann nach der Montage der Markierung des Oberen Totpunktes einer Kurbelwelle dienen. Die Zahnradkontur weist Zähne und Zahnlücken auf, wobei die Positioniereinrichtung in wenigstens eine Zahnlücke eingreift und so das Geberrad blockiert.

Der Gehäuseverschlussdeckel kann im Bereich der Durchtrittsöffnung einen axialen Absatz zur Aufnahme des Geberrades aufweisen. Dadurch ist das Geberrad zumindest teilweise durch den Gehäuseverschlussdeckel überdeckt und dadurch vor Beschädigungen geschützt.

Der Absatz kann zumindest eine teilweise umfangsförmig verlaufende Ausnehmung aufweisen, wobei die Positioniereinrichtung in die Ausnehmung hineinragt. Dabei Ist die Ausnehmung so ausgebildet, dass sich die Positioniereinrichtung in der Ausnehmung verdrehen kann. Damit stellt die Ausnehmung den Begrenzer dar, der nur ein begrenztes Verdrehen der Positioniereinrichtung mit dem Geberrad zulässt.

Die Positioniereinrichtung kann als Stab ausgebildet sein und das Geberrad umgreifen. Der Stab kann dabei als Spritzgussteil aus Kunststoff kostengünstig hergestellt sein. Eine stabförmige Positioniereinrichtung ist einfach montierbar und demontierbar und umgreift das Geberrad an zwei 184° voneinander entfernten Stellen. Zur Verdrehsicherung sind an zwei einander gegenüber liegenden Seiten Ausnehmungen angeordnet, in die die Positioniereinrichtung hineinragt.

Zur Montage der Dichtlippe kann auf der abzudichtenden Welle ein Montagering vorgesehen sein und die Positioniereinrichtung kann an dem Montagering angeordnet sein. Montageringe werden insbesondere bei Dichtlippen aus PTFE eingesetzt, da diese aus zylindrischen Halbzeugen hergestellt werden und ein ausgeprägtes Rückstellverhalten aufweisen. Das bedeutet, dass die Dichtlippe nach Verformung in die Scheibenform zurückkehrt und dabei radial nach innen weist. Dieses Verhalten ist während der bestimmungsgemäßen Verwendung vorteilhaft, weil die Dichtlippe so stets mit Vorspannung an der abzudichtenden Welle anliegt. Es erschwert jedoch die Montage auf die Welle. Der Montagering spreizt die Dichtlippe auf, so dass die Montage vereinfacht ist und die Dichtlippe während des Transports geschützt ist. Der Montagering ist, ebenso wie die Positioniereinrichtung, eine Montagehilfe und wird nach der Montage entfernt. Dabei kann die Positioniereinrichtung direkt auf dem Montagering angeordnet sein. Dabei kann die Positioniereinrichtung einstückig mit dem Montagering ausgebildet sein oder durch eine Klebe- oder Schweißverbindung stoffschlüssig mit dem Montagering verbunden sein. Dabei werden nach der Montage der Montagering und die Positioniereinrichtung gleichzeitig entfernt.

Die Positioniereinrichtung kann über ein Filmscharnier an dem Montagering festgelegt sein. Dabei kann die Positioniereinrichtung nach der Montage des Geberrades auf die Welle von dem Geberrad entfernt werden, wobei es verliersicher an dem Montagering befestigt ist. In einer anderen Ausgestaltung kann die Positioniereinrichtung über eine form- und/oder kraftschlüssige Verbindung an dem Montagering befestigt sein. Derartige Verbindungen können Steck- oder Klipsverbindungen sein. Diese sind leicht lösbar.

Die Positioniereinrichtung kann in der Sensorhalterung angeordnet sein. Dabei erfolgt die Befestigung in der Sensorhalterung so, dass sich zwischen Positioniereinrichtung und Geberrad und/oder zwischen Positioniereinrichtung und Sensorhalterung ein Spiel ergibt, durch das ein begrenztes Verdrehen des Geberrads möglich ist. Bei dieser Ausgestaltung ist es nicht möglich, die Positioniereinrichtung in der Sensorhalterung zu "vergessen", da eine Montage des Sensors sonst nicht möglich ist. Die Positioniereinrichtung kann dabei besonders einfach an den für den Sensor vorgesehenen Befestigungsmitteln festgelegt werden.

### Kurzbeschreibung der Zeichnung

Einige Ausführungsbeispiele der erfindungsgemäßen Dichtungsanordnung werden nachfolgend anhand der Figuren näher erläutert. Diese zeigen, jeweils schematisch:
- Fig. 1: eine Dichtungsanordnung mit einer stabförmigen Positioniereinrichtung;
- Fig. 1a: ein Detail der Dichtungsanordnung nach Figur 1;
- Fig. 2: eine Dichtungsanordnung mit einer an einem Montagering festgelegten Positioniereinrichtung;
- Fig. 2a: ein Detail der Dichtungsanordnung nach Figur 2;
- Fig. 3: eine Dichtungsanordnung mit einer über ein Filmscharnier an einem Montagering festgelegten Positioniereinrichtung;
- Fig. 3a: ein Detail der Dichtungsanordnung nach Figur 3 bei geöffneter Positioniereinrichtung;
- Fig. 3b: ein Detail der Dichtungsanordnung nach Figur 3 bei geschlossener Positioniereinrichtung;
- Fig. 4: eine Dichtungsanordnung mit einer in der Sensorhalterung angeordneten Positioniereinrichtung.

### Ausführung der Erfindung

Die Figuren zeigen eine Dichtungsanordnung 1 mit einem Gehäuseverschlussdeckel 2 aus Metall oder Kunststoff mit einer Durchtrittsöffnung 3 für eine abzudichtende Welle, hier einer Kurbelwelle eines Kraftfahrzeugmotors. In der Durchtrittsöffnung 3 ist eine dynamische Dichtlippe 4 aus PTFE angeordnet, die bei der bestimmungsgemäßen Verwendung an der Kurbelwelle mit elastischer Vorspannung dichtend anliegt. Die Dichtungsanordnung 1 weist ferne eine Sensorhalterung 5 zur Aufnahme eines Sensors, beispielsweise eines Hall-Sensors auf. Die Sensorhalterung 5 ist an dem Gehäuseverschlussdeckel 2 angeordnet ist. Des Weiteren ist ein Geberrad 6 zur Befestigung auf der abzudichtenden Kurbelwelle vorgesehen und der Durchtrittsöffnung 3 zugeordnet. Das Geberrad 6 weist auf seinem Umfang eine Zahnradkontur mit Zähnen 11 und Zahnlücken 12 auf. Das Geberrad 6 ist bei allen Ausführungsbeispielen durch eine Positioniereinrichtung 7 in der Durchtrittsöffnung 3 so fixiert, dass das Geberrad 6 nur begrenzt verdrehbar ist. Dabei ist die Befestigung der Positioniereinrichtung 7 so ausgestaltet, dass das Geberrad 6 maximal in einem festgelegten Winkelbereich von 10° in belde Seiten verdrehbar ist. Dabei greift die Positioniereinrichtung 7 in wenigstens eine Zahnlücke 12 ein und blockiert das Geberrad 6. Die Positioniereinrichtung 7 besteht vorzugsweise aus einem Kunststoff und ist dadurch, insbesondere bei einer Ausgestaltung als Spritzgießteil besonders kostengünstig herstellbar. Es ist auch denkbar, die Positioniereinrichtung aus einem flexiblen Material, beispielsweise einem Elastomer oder einem Schaumstoff, herzustellen. Bei dieser Ausgestaltung erleichtert sich die Arretierung der Positioniereinrichtung 7.

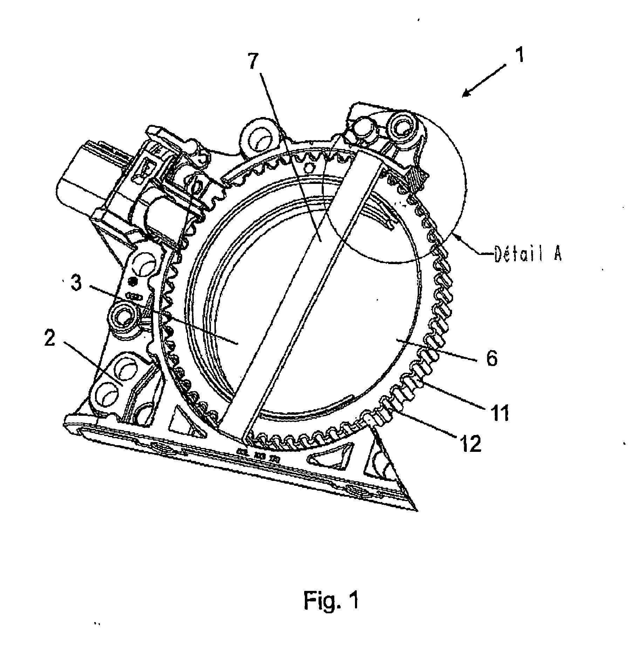

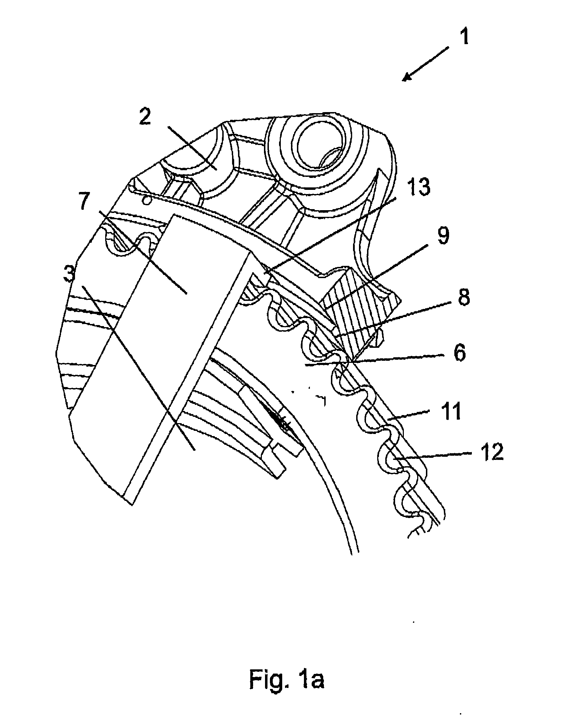

Figur 1 zeigt eine Ausgestaltung bei der der Gehäuseverschlussdeckel 2 der Dichtungsanordnung 1 im Bereich der Durchtrittsöffnung 3 einen axialen Absatz 8 zur Aufnahme des Geberrades 6 aufweist. Der Absatz 8 weist zwei einander gegenüber liegende teilweise umfangsförmig verlaufende Ausnehmungen 9 auf. Die Positioniereinrichtung 7 ist als Stab ausgebildet und umgreift das Geberrad 6. An den beiden Enden weist die Positioniereinrichtung 7 jeweils einen Absatz 13 auf, die beide senkrecht abragen und in außenseitig in die Ausnehmung 9 hineinragen und innenseitig wenigstens an einer Zahnlücke 12 anliegen und das Geberrad 6 dadurch blockieren. Die Positioniereinrichtung 7 ist in dieser Ausgestaltung als Kunststoffspritzgussteil ausgebildet

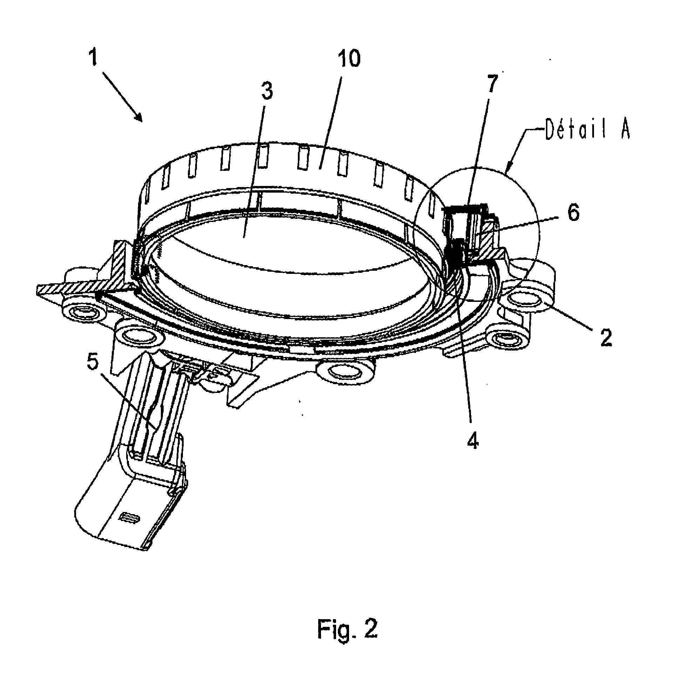

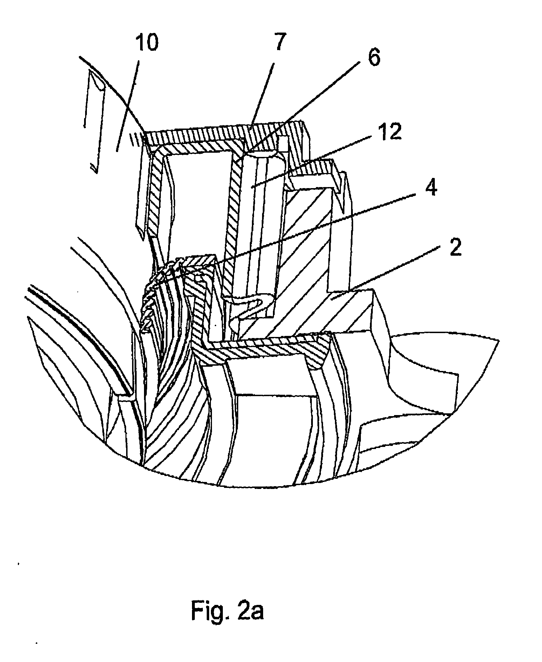

Figur 2 zeigt eine weitere Ausgestaltung der Dichtungsanordnung 1, wobei ein Montagering 10 zur Aufweitung der Dichtlippe 4 und zur und Montage der Dichtlippe 4 auf der abzudichtenden Welle vorgesehen ist und die Positioniereinrichtung 7 an dem Montagering 10 angeordnet ist. In dieser Ausgestaltung ist die Positioniereinrichtung 7 auf den Montagering 10 aufgeklipst und greift mit dem freien Ende in die Zahnradkontur des Geberrades 6 ein. In anderen Ausgestaltungen kann die Positioniereinrichtung auch einstückig mit dem Montagering 10 ausgebildet sein oder auf diesen aufgeklebt sein.

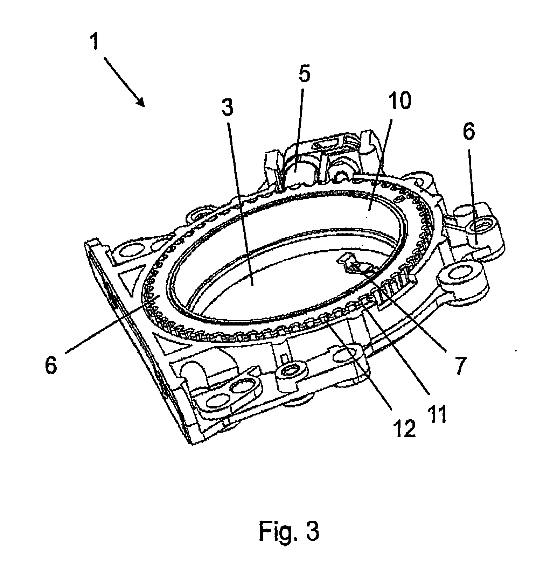

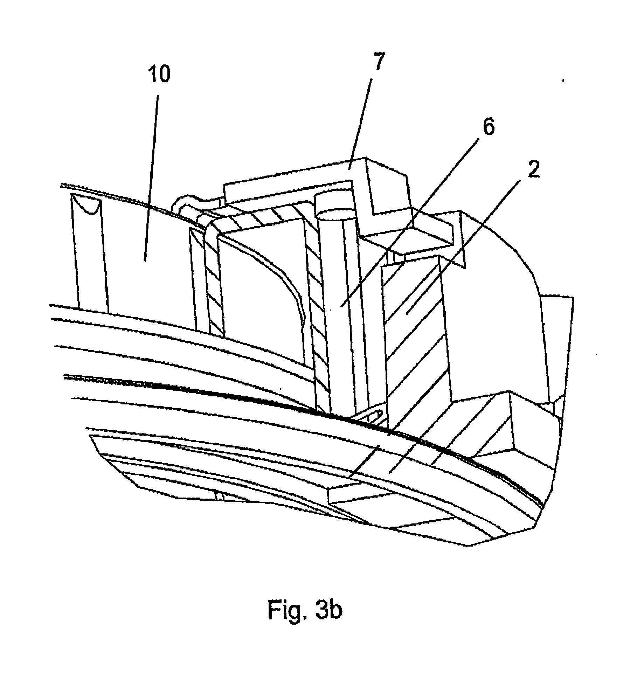

Figur 3 zeigt eine weitere Ausgestaltung gemäß Figur 2, wobei die Positioniereinrichtung 7 hier über ein Filmscharnier 11 an dem Montagering 10 festgelegt ist.

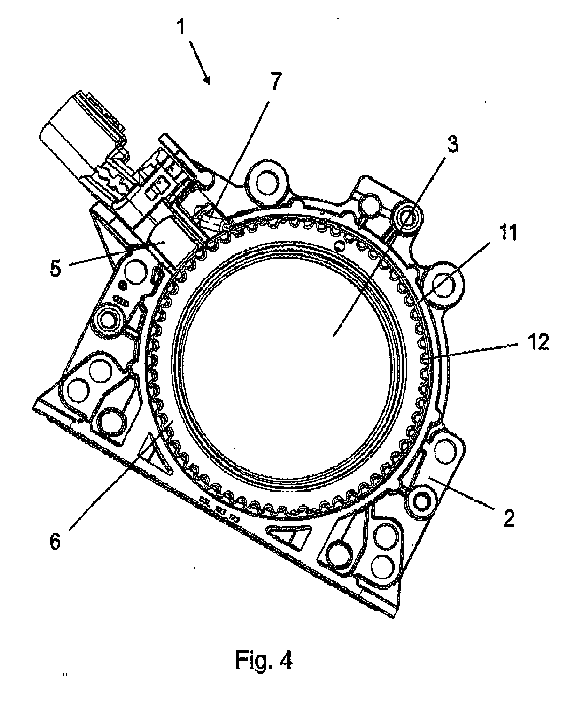

Figur 4 zeigt eine Ausgestaltung der Dichtungsanordnung 1, bei der die Positioniereinrichtung 7 in der Sensorhalterung 5 angeordnet ist. Dabei ist die Befestigung der Positioniereinrichtung 7 in der Sensorhafterung 5 so ausgestaltet, dass die Positioniereinrichtung 7 ein Spiel aufweist, so dass das Geberrad 6 begrenzt verdrehbar ist.

## Patentansprüche

1. Dichtungsanordnung (1), umfassend einen Gehäuseverschlussdeckel (2) mit einer Durchtrittsöffnung (3) für eine abzudichtende Welle, wobei in der Durchtrittsöffnung (3) eine dynamische Dichtlippe (4) angeordnet ist, einer Sensorhalterung (5), die an dem Gehäuseverschlussdeckel (2) angeordnet ist sowie ein Geberrad (6) zur Befestigung auf der abzudichtenden Welle, **dadurch gekennzeichnet, dass** das Geberrad (6) so durch eine Positioniereinrichtung (7) in der Durchtrittsöffnung (3) fixiert ist, dass das Geberrad (6) nur begrenzt innerhalb vorgegebener Winkelbereiche verdrehbar ist.

2. Dichtungsanordnung nach Anspruch 1, **dadurch gekennzeichnet, dass** die Positioniereinrichtung (7) so gestaltet ist, dass das Geberrad (6) maximal in einem festgelegten Winkelbereich in beide Seiten verdrehbar ist.

3. Dichtungsanordnung nach Anspruch 1 oder 2, **dadurch gekennzeichnet, dass** das Geberrad (6) eine Zahnradkontur aufweist und dass die Positioniereinrichtung (7) in die Zahnradkontur eingreift.

4. Dichtungsanordnung nach einem der Ansprüche 1 bis 3, **dadurch gekennzeichnet, dass** der Gehäuseverschlussdeckel (2) im Bereich der Durchtrittsöffnung (3) einen axialen Absatz (8) zur Aufnahme des Geberrades (6) aufweist.

5. Dichtungsanordnung nach Anspruch 4, **dadurch gekennzeichnet, dass** der Absatz (8) zumindest eine teilweise umfangsförmig verlaufende Ausnehmung (9) aufweist, wobei die Positioniereinrichtung (7) in die Ausnehmung (9) hineinragt.

6. Dichtungsanordnung nach einem der Ansprüche 1 bis 5, **dadurch gekennzeichnet, dass** die Positioniereinrichtung (7) als Stab ausgebildet ist und das Geberrad (6) umgreift.

7. Dichtungsanordnung nach einem der Ansprüche 1 bis 6, **dadurch gekennzeichnet, dass** ein Montagering (10) zur Montage der Dichtlippe (4) auf der abzudichtenden Welle vorgesehen ist und dass die Positioniereinrichtung (7) an dem Montagering (10) angeordnet ist.

8. Dichtungsanordnung nach Anspruch 7, **dadurch gekennzeichnet, dass** die Positioniereinrichtung (7) über ein Filmscharnier (11) an dem Montagering (10) festgelegt ist.

9. Dichtungsanordnung nach Anspruch 7, **dadurch gekennzeichnet, dass** die Positioniereinrichtung (7) über eine form- und/oder kraftschlüssige Verbindung an dem Montagering (10) befestigt ist

10. Dichtungsanordnung nach einem der Ansprüche 1 bis 5, **dadurch gekennzeichnet, dass** die Positioniereinrichtung (7) in der Sensorhalterung (5) angeordnet ist.

## Claims

1. Seal arrangement (1), comprising a housing cloture cover (2) with a passage opening (3) for a shaft to be sealed, a dynamic sealing lip (4) being arranged in the passage opening (3), a sensor holder (5) which is arranged on the housing closure cover (2), and a rotary transducer (6) for fastening on the shaft to be sealed, **characterized in that** the rotary transducer (6) is fixed by a positioning device (7) in the passage opening (3) in such a way that the rotary transducer (6) can be rotated only to a limited extent within predefined angle ranges.

2. Seal arrangement according to Claim 1, **characterized in that** the positioning device (7) is designed in such a way that the rotary transducer (6) can be rotated at most in a fixed angle range on both sides.

3. Seal arrangement according to Claim 1 or 2, **characterized in that** the rotary transducer (6) has a gearwheel contour, and **in that** the positioning device (7) engages into the gearwheel contour.

4. Seal arrangement according to one of Claims 1 to 3, **characterized in that** the housing closure cover (2) has an axial shoulder (8) for deceiving the rotary transducer (6) in the region of the passage opening (3).

5. Seal arrangement according to Claim 4, **characterized in that** the shoulder (8) has at least one partially circumferentially running recess (9), the positioning device (7) protruding into the recess (9).

6. Seal arrangement according to one of Claims 1 to 5, **characterized in that** the positioning device (7) is configured as a rod and reaches around the rotary transducer (6).

7. Seal arrangement according to one of Claims 1 to 6, **characterised in that** a mounting ring (10) is provided for mounting the sealing lip (4) on the shaft to be sealed, and **in that** the positioning device (7) is arranged on the mounting ring (10).

8. Seal arrangement according to Claim 7, **characterized in that** the positioning device (7) is fixed on the mounting ring (10) via an integral hinge (11).

9. Seal arrangement according to Claim 7, **characterized in that** the positioning device (7) is fastened to the mounting ring (10) via a positively locking and/or non-positive connection.

10. Seal arrangement according to one of Claims 1 to 5, **characterized in that** the positioning device (7) is arranged in the sensor holder (5).

## Revendications

1. Dispositif d'étanchéité (1), comprenant un couvercle de fermeture de boîtier (2) avec une ouverture de passage (3) pour un arbre à rendre étanche, une lèvre d'étanchéité dynamique (4) étant disposée dans l'ouverture de passage (3), avec un support de détecteur (5), qui est disposé sur le couvercle de fermeture de boîtier (2), ainsi qu'une roue de capteur (6) pour la fixation sur l'arbre à rendre étanche, **caractérisé en ce que** la roue de capteur (6) est fixée par un dispositif de positionnement (7) dans l'ouverture de passage (3) de telle manière que la roue de capteur (6) ne puisse tourner que de manière limitée à l'intérieur de plages angulaires prédéterminées.

2. Dispositif d'étanchéité selon la revendication 1, **caractérisé en ce que** le dispositif de positionnement (7) est configuré de telle manière que la roue de capteur (6) puisse tourner au maximum dans une plage angulaire fixée dans les deux côtés.

3. Dispositif d'étanchéité selon la revendication 1 ou 2, **caractérisé en ce que** la roue de capteur (6) présente un contour de roue dentée et **en ce que** le dispositif de positionnement (7) s'engage dans le contour de roue dentée.

4. Dispositif d'étanchéité selon l'une quelconque des revendications 1 à 3, **caractérisé en ce que** le couvercle de fermeture de boîtier (2) présente dans la région de l'ouverture de passage (3) un épaulement axial (8) destiné à recevoir la roue de capteur (6).

5. Dispositif d'étanchéité selon la revendication 4, **caractérisé en ce que** l'épaulement (8) présente un évidement (9) s'étendant au moins en partie de façon périphérique, le dispositif de positionnement (7) pénétrant dans l'évidement (7).

6. Dispositif d'étanchéité selon l'une quelconque des revendications 1 à 5, **caractérisé en ce que** le dispositif de positionnement (7) est configuré en forme de barre et embrasse la roue de capteur (6).

7. Dispositif d'étanchéité selon l'une quelconque des revendications 1 à 6, **caractérisé en ce qu'**il est prévu une bague de montage (10) pour le montage de la lèvre d'étanchéité (4) sur l'arbre à rendre étanche et **en ce que** le dispositif de positionnement (7) est disposé sur la bague de montage (10).

8. Dispositif d'étanchéité selon la revendication 7, **caractérisé en ce que** le dispositif de positionnement (7) est fixé à la bague de montage (10) au moyen d'une charnière pelliculaire (11).

9. Dispositif d'étanchéité selon la revendication 7, **caractérisé en ce que** le dispositif de positionnement (7) est fixé à la bague de montage (10) au moyen d'un assemblage par emboîtement et/ou par adhérence.

10. Dispositif d'étanchéité selon l'une quelconque des revendications 1 à 5, **caractérisé en ce que** le dispositif de positionnement (7) est disposé dans le support de détecteur (5).
